# EUROPÄISCHE PATENTANMELDUNG

(11) **EP 2 031 263 A2**
(43) Veröffentlichungstag der Anmeldung: **04.03.2009**
(21) Anmeldenummer: 08162786.1
(22) Anmeldetag: 21.08.2008
(51) Int. Cl.: F16D 7/00, B60J 7/22

(54) **Drehverbindungseinheit**

(30) Priorität: 30.08.2007 DE 102007042957
(71) Anmelder: Scambia Industrial Developments Aktiengesellschaft, 9494 Schaan (LI)
(72) Erfinder: Götz, Matthias, 71706 Markgröningen (DE); Riehle, Jörg, 71679 Asperg (DE)
(74) Vertreter: Hoeger, Stellrecht & Partner Patentanwälte

(57) **Zusammenfassung**

Um eine Drehverbindungseinheit umfassend ein erstes und ein zweites Verbindungselement, die in mindestens einer Drehstellung miteinander unter Bildung einer drehfesten Verbindung verrastbar und durch eine Relativdrehung entrastbar sind, zu schaffen, die einfach aufgebaut ist und deren Verrasten und Entrasten zu möglichst geringen Querkräften zwischen den Verbindungselementen führt, wird vorgeschlagen, dass das erste Verbindungselement einen eine Ausnehmung umschließenden Außenkörper mit mindestens einem ersten Rastelement aufweist, dass das zweite Verbindungselement mit einem Innenkörper in die Ausnehmung eingreift, dass der Innenkörper mindestens ein zweites Rastelement aufweist und dass eines der Rastelemente mindestens eine radiale Vertiefung und das andere der Rastelemente mindestens einen radialen Vorsprung aufweist.

## Beschreibung

Die Erfindung betrifft eine Drehverbindungseinheit umfassend ein erstes und ein zweites Verbindungselement, die in mindestens einer Drehstellung miteinander unter Bildung einer drehfesten Verbindung verrastbar und durch eine Relativdrehung entrastbar sind.

Derartige Drehverbindungseinheiten sind aus dem Stand der Technik bekannt, bei diesen besteht jedoch das Problem, dass zumindest beim Entrasten Querkräfte auftreten, die eine stabile Führung der Verbindungselemente relativ zueinander erforderlich machen.

Der Erfindung liegt daher die Aufgabe zugrunde, eine Drehverbindungseinheit zu schaffen, die einfach aufgebaut ist und deren Verrasten und Entrasten zu möglichst geringen Querkräften zwischen den Verbindungselementen führt.

Diese Aufgabe wird bei einer Drehverbindungseinheit der eingangs beschriebenen Art erfindungsgemäß dadurch gelöst, dass das erste Verbindungselement einen eine Ausnehmung umschließenden Außenkörper mit mindestens einem Rastelement aufweist, dass das zweite Verbindungselement mit einem Innenkörper in die Ausnehmung eingreift, dass der Innenkörper ein zweites Rastelement aufweist und dass eines der Rastelemente mindestens eine radiale Vertiefung und das andere der Rastelemente mindestens einen radialen Vorsprung aufweist.

Der Vorteil der erfindungsgemäßen Lösung ist darin zu sehen, dass dadurch, dass die Rastelemente an Außenkörper und Innenkörper angeordnet sind, die ineinandergreifen, in einfacher Weise ein Einrasten oder Entrasten der Rastelemente bei möglichst geringen Querkräften realisiert werden kann.

Besonders günstig lassen sich die Querkräfte dann gering halten, wenn die Verbindungselemente bei Berührungskontakt des Innenkörpers mit dem Außenkörper durch sich ausbildende Berührungsstellen zwischen diesen relativ zueinander zentriert geführt sind.

Dabei besteht die Möglichkeit, ständig einen Berührungskontakt zwischen dem Innenkörper und dem Außenkörper vorzusehen oder auch nur bei dem Verrasten und/oder Entrasten der Rastelemente oder unmittelbar vor oder nach einem derartigen Verrasten und/oder Entrasten.

Besonders vorteilhaft ist die erfindungsgemäße Lösung dann, wenn die Verbindungselemente bei Berührungskontakt des Innenkörpers mit dem Außenkörper durch sich ausbildende Berührungsstellen zwischen diesen relativ zueinander zentriert geführt sind. Durch diese Zentrierung über Berührungsstellen zwischen Innenkörper und Außenkörper lassen sich in besonders einfacher Weise Querkräfte möglichst gering halten oder weitgehend unterdrücken.

Dabei hat es sich als besonders günstig erwiesen, wenn die Verbindungselemente in der verrasteten Stellung durch die Berührungsstellen zwischen dem Innenkörper und dem Außenkörper relativ zueinander zentriert geführt sind.

Ferner hat es sich als günstig erwiesen, wenn der Innenkörper bei einer Verrastbewegung und bei einer Entrastbewegung über die Berührungsstellen gegenüber dem Außenkörper abgestützt ist. Diese Lösung hat den großen Vorteil, dass insbesondere bei der Entrastbewegung oder Verrastbewegung große Querkräfte austreten, die sich über die Berührungsstellen abfangen lassen und somit weitgehend reduzieren oder unterdrücken lassen.

Um eine möglichst gute Zentrierungswirkung zu erreichen hat es sich als zweckmäßig erwiesen, wenn die Zentrierung über mindestens zwei Berührungsstellen erfolgt.

Noch vorteilhafter ist es jedoch, wenn die Zentrierung über mindestens drei Berührungsstellen erfolgt, da damit in einfacher Weise eine Selbstzentrierung der Verbindungselemente relativ zueinander erreichbar ist, wobei die Berührungsstellen vorzugsweise in einem Winkelabstand voneinander angeordnet sind.

Prinzipiell ist es im Rahmen der erfindungsgemäßen Lösung denkbar, den Außenkörper und den Innenkörper so auszubilden, dass diese Berührungsstellen ausbilden, die unabhängig von den Rastelementen sind.

Konstruktiv besonders einfach ist jedoch eine Lösung, bei welcher mindestens eines der Rastelemente zur Bildung einer Berührungsstelle beiträgt.

Ferner ist eine Lösung konstruktiv besonders günstig, bei welcher alle Rastelemente eines der Verbindungselemente zur Bildung der Berührungsstellen beitragen.

Die Berührungsstellen können in unterschiedlichster Art und Weise ausgebildet sein. Eine zweckmäßige Lösung sieht dabei vor, dass die Berührungsstellen durch Innenflächenbereiche des Außenkörpers gebildet sind.

Ferner sieht eine günstige Lösung vor, dass die Berührungsstellen durch Außenflächenbereiche des Innenkörpers gebildet sind.

Eine hinsichtlich der Zentrierung besonders zweckmäßige Lösung sieht vor, dass der Innenkörper durch ständige Abstützung am Außenkörper zentriert zum Mantelkörper geführt ist. Damit lassen sich auf jeden Fall Querkräfte beim Verrasten und Entrasten im Wesentlichen vermeiden.

Hinsichtlich der Rastbewegung wurden im Zusammenhang mit der bisherigen Erläuterung der einzelnen Ausführungsbeispiele ebenfalls keine näheren Angaben gemacht. So wäre es beispielsweise denkbar, dass die Rastbewegung der Rastelemente zumindest teilweise in axialer Richtung erfolgt.

Besonders günstig ist es jedoch, wenn eine radiale Bewegung von mindestens einem der Rastelemente beim Verrasten und Entrasten erfolgt.

Dabei kann die radiale Relativbewegung lediglich eine Teilkomponente der Gesamtbewegung sein. Eine besonders günstige Lösung sieht jedoch vor, dass beim Verrasten und Entrasten ausschließlich eine radiale Relativbewegung der Rastelemente erfolgt.

Diese radiale Relativbewegung der Rastelemente kann vorzugsweise dadurch erfolgen, dass mindestens bereichsweise Deformationen des Mantelkörpers in den Bereichen des Außenkörpers erfolgen, die zu den Berührungsstellen beitragen.

Alternativ dazu sieht eine günstige Lösung vor, dass die mindestens bereichsweise Deformation des Mantelkörpers auch in den Bereichen des Außenkörpers zwischen den sich ausbildenden Berührungsstellen erfolgt.

Das heißt, dass bei dieser Lösung die Gesamtform des Außenkörpers dazu ausgenützt wird, eine elastische Deformation desselben zu erreichen, um ein Verrasten und/oder Entrasten der Rastelemente zu erhalten.

Dabei könnte grundsätzlich der Außenkörper durch eine Vielzahl von Zungen gebildet sein.

Eine konstruktiv günstige Lösung sieht vor, dass der Außenkörper einen geschlossen umlaufenden Mantelkörper aufweist. In diesem Fall weist der Mantelkörper einen geschlossen umlaufenden Körper auf, der als Ganzes die Deformationen durchführt.

Insbesondere ist es dabei günstig, wenn der Mantelkörper in zwischen den Berührungsstellen liegenden Bereichen deformierbar ist, so dass nicht nur in den Bereichen, in denen Berührungsstellen existieren, eine Deformation des Mantelkörpers erfolgt, sondern auch in den zwischen diesen Berührungsstellen liegenden Bereichen.

Besonders günstig lässt sich die erfindungsgemäße Drehverbindungseinheit dann ausbilden, wenn das erste Verbindungselement eine Vielzahl von Rastelementen aufweist, so dass eine Mehrfachverrastung realisierbar ist.

Ferner ist es ebenfalls günstig, wenn das zweite Verbindungselement eine Vielzahl von Rastelementen aufweist.

Die Vielzahl von Rastelementen beim ersten Verbindungselement und beim zweiten Verbindungselement kann in unterschiedlichster Art und Weise zur Ausbildung von Raststellungen eingesetzt werden.

Beispielsweise besteht die Möglichkeit, nur eine Raststellung vorzusehen, in der die Vielzahl der Rastelemente des einen Verbindungselements mit der Vielzahl der Rastelemente des anderen Verbindungselements in Verrastung ist.

Es besteht aber auch die Möglichkeit, entweder jeweils mit der gleichen Anzahl von Rastelementen oder mit unterschiedlichen Anzahlen von Rastelementen eine unterschiedliche Zahl von Raststellungen auszubilden.

Eine besonders günstige Lösung sieht vor, dass die Vielzahl von Rastelementen des einen Verbindungselements einer ganzzahligen Vielfachen der Vielzahl von Rastelementen des anderen Verbindungselements entspricht.

Somit besteht die Möglichkeit, eine Vielzahl von Raststellungen zu realisieren, in der jeweils mehrere Rastelemente in Eingriff sind.

Besonders günstig ist diese Lösung dann, wenn die Drehverbindungseinheit eine dem ganzzahligen Vielfachen entsprechende Anzahl von unterschiedlichen Raststellungen aufweist.

Hinsichtlich der Ausbildung der Drehverbindungseinheit beim Durchführen einer Relativverdrehung der Verbindungselemente wurden bislang keine näheren Angaben gemacht.

So sieht ein vorteilhaftes Ausführungsbeispiel vor, dass die Drehverbindungseinheit in einer möglichen Drehrichtung eine unbegrenzte Zahl von Entrastvorgängen und Verrastvorgängen zulässt. Das heißt, dass eine Relativverdrehung der Verbindungselemente möglich ist, die zu einer beliebigen Zahl von aufeinanderfolgenden Entrastvorgängen und Verrastvorgängen führen kann.

Eine derartige Drehverbindungseinheit findet beispielsweise Anwendung bei einem Antrieb und einem von dem Antrieb bewegbaren Element, wobei bei Übersteigen eines Schwelldrehmoments ein Entrastvorgang einsetzt, auf den ein nachfolgender Verrastvorgang folgt, wobei bei erneutem Übersteigen des Drehmoments erneut ein Entrastvorgang einsetzt.

Alternativ dazu lässt sich die erfindungsgemäße Drehverbindungseinheit auch dann einsetzen, wenn diese in einer möglichen Drehrichtung eine vorgegebene Anzahl von Entrastvorgängen und Verrastvorgängen zulässt.

Das heißt es wäre beispielsweise denkbar, ausgehend von einer Raststellung nur einen Entrastvorgang und sogar keinen Verrastvorgang in einer anderen Raststellung zuzulassen.

Es ist aber auch denkbar, einen Entrastvorgang und einen Verrastvorgang oder mehrere Entrastvorgänge und Verrastvorgänge zuzulassen.

Derartige Drehverbindungseinheiten werden daher beispielsweise bei der Verbindung zweier Teile eingesetzt, die in definierte Drehstellungen zueinander bringbar sein sollen, wobei die definierten Drehstellungen einer vorgegebenen Anzahl von Entrastvorgängen und Verrastvorgängen entsprechen.

Darüber hinaus betrifft die Erfindung auch noch eine Windstoppeinrichtung, umfassend eine Windstoppbasis und eine gegenüber der Windstoppbasis zwischen einer aktiven Stellung und einer inaktiven Stellung bewegbare Windschotteinheit, wie sie üblicherweise bei Kraftfahrzeugen Verwendung finden.

Vorzugsweise ist bei einem Ausführungsbeispiel einer derartigen Windstoppeinrichtung die Windschotteinheit mit der Windstoppbasis über eine Drehverbindungseinheit gemäß einer der voranstehenden Ausführungsformen gekoppelt.

In diesem Fall ist beispielsweise eine Drehverbindungseinheit vorgesehen, die eine begrenzte Zahl von Entrastvorgängen und Verrastvorgängen bei Relativdrehung in einer Drehrichtung vorsieht, wobei dann die Drehverbindungseinheit dazu dient, die Windschotteinheit relativ zur Windstoppbasis entweder in der aktiven Stellung oder der inaktiven Stellung oder in beiden Stellungen durch eine Raststellung festzustellen, wobei die Raststellung sich lösen lässt, so dass dann wieder ein Übergang von der einen Stellung in die andere Stellung möglich ist.

Darüber hinaus betrifft die Erfindung ebenfalls noch eine Windstoppeinrichtung, umfassend einen Windstoppbasis und eine gegenüber der Windstoppbasis zwischen einer aktiven Stellung und einer inaktiven Stellung mittels eines Aufstellantriebs bewegbare Windschotteinheit.

Bei diesem Ausführungsbeispiel ist erfindungsgemäß vorgesehen, dass der Aufstellantrieb über eine Drehverbindungseinheit gemäß einer der voranstehenden Ausführungsformen ein Bewegen der Windschotteinheit bewirkt.

Dabei kann der Aufstellantrieb beispielsweise an der Windstoppbasis angeordnet sein und somit die Windschotteinheit relativ zur Windstoppbasis bewegen.

Es wäre aber auch denkbar, dass der Aufstellantrieb an der Windschotteinheit angeordnet ist und somit diese relativ durch Einwirken auf die Windstoppbasis zur Windstoppbasis bewegt.

Die Drehverbindungseinheit ist in diesem Fall vorzugsweise so ausgebildet, dass sie in einer Drehrichtung eine beliebige Zahl von Entrastvorgängen und Verrastvorgängen zulässt, so dass bei Überschreiten eines Schwellwertes für das Drehmoment jeweils ein Entrastvorgang einsetzen kann, auf den wiederum ein Verrastvorgang folgt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: einen Querschnitt durch ein erstes Ausführungsbeispiel einer erfindungsgemäßen Drehverbindungseinheit in einer Raststellung;
- Figur 2: einen Schnitt entsprechend Figur 1 durch das erste Ausführungsbeispiel in einer entrasteten Stellung;
- Figur 3: eine Windstoppeinrichtung mit einer in einer inaktiven Stellung stehenden Windschotteinheit, die über eine Drehverbindungseinheit gemäß dem ersten Ausführungsbeispiel durch einen Aufstellantrieb relativ zu einer Windstoppbasis verschwenkbar ist;
- Figur 4: eine Darstellung ähnlich Figur 3 der Windstoppeinrichtung mit in der aktiven Stellung stehender Windschotteinheit;
- Figur 5: eine Explosionsdarstellung der erfindungsgemäßen Drehverbindungseinheit, angeordnet zwischen dem Aufstellantrieb und einem Mittelgelenk der Windschotteinheit;
- Figur 6: eine vergrößerte Darstellung des Aufstellantriebs des ersten Ausführungsbeispiels der erfindungsgemäßen Drehverbindungseinheit und des Mittelgelenks, eingebaut in die Windstoppeinrichtung gemäß Figur 3;
- Figur 7: einen Schnitt entsprechend Figur 1 durch ein zweites Ausführungsbeispiel einer erfindungsgemäßen Drehverbindungseinheit;
- Figur 8: einen Schnitt ähnlich Figur 2 durch das zweite Ausführungsbeispiel der erfindungsgemäßen Drehverbindungseinheit;
- Figur 9: eine perspektivische Darstellung einer Windstoppeinrichtung mit einer Windschotteinheit in ihrer inaktiven Stellung, welche relativ zu einer Abdeckeinheit durch Drehverbindungseinheiten gemäß dem zweiten Ausführungsbeispiel in verschiedenen Stellungen verrastbar ist;
- Figur 10: eine Darstellung ähnlich Figur 9 mit in aktiver Stellung stehender Windschotteinrichtung und
- Figur 11: eine Explosionsdarstellung ähnlich Figur des zweiten Ausführungsbeispiels der erfindungsgemäßen Drehverbindungseinheit.

Ein erstes Ausführungsbeispiel einer erfindungsgemäßen Drehverbindungseinheit, als Ganzes mit 10 bezeichnet, umfasst ein erstes, als Außenkörper ausgebildetes Verbindungselement 12 und ein zweites, als Innenkörper ausgebildetes Verbindungselement 14, die beide koaxial zu einer Drehachse 16 angeordnet sind.

Das erste, als Außenkörper ausgebildete Verbindungselement 12 weist dabei eine Ausnehmung 20 auf, die von einem Mantelkörper 22 umschlossen ist, wobei der Mantelkörper 22 in einer Umlaufrichtung 24 um die Drehachse 16 als in sich geschlossen umlaufender Körper ausgebildet ist und auf seiner der Ausnehmung 20 zugewandten Seite als erste Rastelemente 26 konkav geformte Vertiefungen 28 aufweist, die in der Umlaufrichtung 24 aufeinanderfolgend angeordnet sind und zwischen denen Erhebungen 30 vorgesehen sind, wobei die zwischen den Vertiefungen 28 liegenden Erhebungen 30 mit einer konvexen Wölbung 32 versehen sind, wobei die Erhebungen 30 so angeordnet und geformt sind, dass sie einen wellenförmigen Übergang von einer Vertiefung 28 zur in Umlaufrichtung 24 nächstfolgenden Vertiefung 28 bilden.

Die Vertiefungen 28 erstrecken sich dabei bezogen auf die Drehachse 16 in radialer Richtung, so dass im Bereich der Vertiefungen 28 der radiale Abstand von der Drehachse 16 größer ist als im Bereich der Erhebungen 30.

Vorzugsweise ändert sich der radiale Abstand zwischen jeweils einer tiefsten Stelle 34 einer Vertiefung 28 und einer höchsten Stelle 36 der nächstfolgenden Erhebung 30 kontinuierlich, so dass zwischen der tiefsten Stelle 34 und der höchsten Stelle 36 eine kontinuierlich verlaufende Stufenfreie Fläche vorliegt.

Das als Innenkörper ausgebildete zweite Verbindungselement 14 weist seinerseits als Rastelemente 42 beispielsweise drei radiale Vorsprünge 44 auf, die als Konvex ausgebildete Wölbung 46 ausgebildet sind, wobei die Wölbung 46 eine derartige Form hat, dass diese spielfrei in eine der Vertiefungen 28 eingreifen kann und somit eine formschlüssige gegenüber einer Drehung um die Achse 16 spielfreie Verbindung zwischen den Verbindungselementen 12 und 14 ergibt.

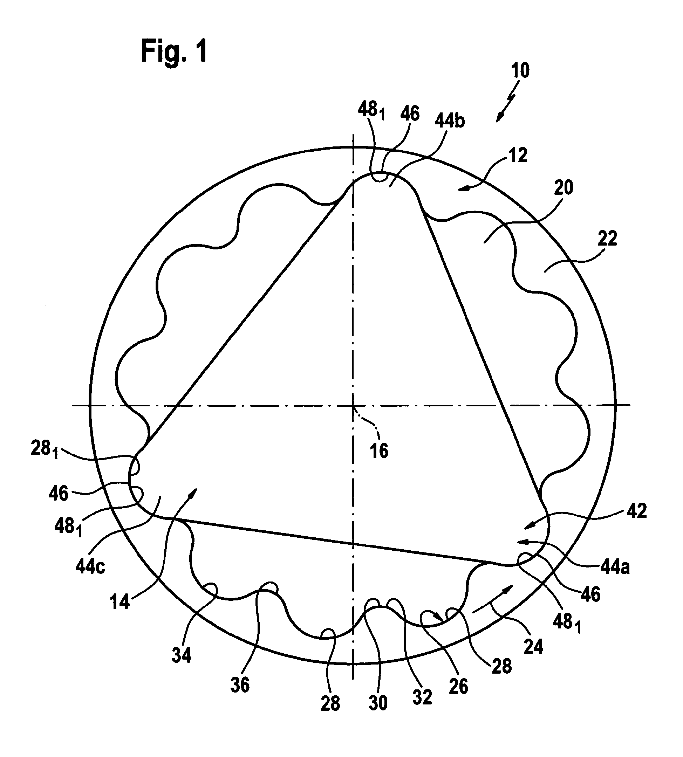

In dem in Figur 1 dargestellten Ausführungsbeispiel umfasst der Innenkörper 14 beispielsweise insgesamt drei radiale Vorsprünge 44, die in der in Figur 1 dargestellten Raststellung jeweils in die Vertiefung 28 eines der Rastelemente 26 des Mantelkörpers 22 eingreifen, und somit den Innenkörper 14 an drei in der Umlaufrichtung 24 im Winkelabstand bezüglich der Drehachse 16 voneinander angeordneten Berührungsstellen 48₁ drehfest fixieren.

Da bei dem dargestellten ersten Ausführungsbeispiel alle Vertiefungen 28 und alle Erhebungen 30 identisch ausgebildet sind und die Vertiefungen mit ihren tiefsten Stellen 34 denselben radialen Abstand von der Drehachse 16 aufweisen sowie die Erhebungen 30 mit ihren höchsten Stellen 36 denselben radialen Abstand von der Drehachse 16 aufweisen und außerdem die Winkelabstände zwischen aufeinanderfolgenden tiefsten Stellen 34 der Vertiefungen 28 und aufeinanderfolgenden höchsten Stellen 36 aufeinanderfolgender Erhebungen 30 jeweils identisch sind, ist der Innenkörper 14 in allen Raststellungen, die relativ zueinander um ein ganzzahliges Vielfaches des Winkelabstandes zwischen aufeinanderfolgenden Vertiefungen 28 versetzt sind, durch Eingreifen der radialen Vorsprünge 44 in die Vertiefungen 28 formschlüssig und drehfest fixiert und im Übrigen wird der Innenkörper 14 durch das Zusammenwirken der drei radialen Vorsprünge 44a, b, c mit den entsprechenden Vertiefungen 28 durch den Mantelkörper 22 koaxial zur Drehachse 16 zentriert gehalten.

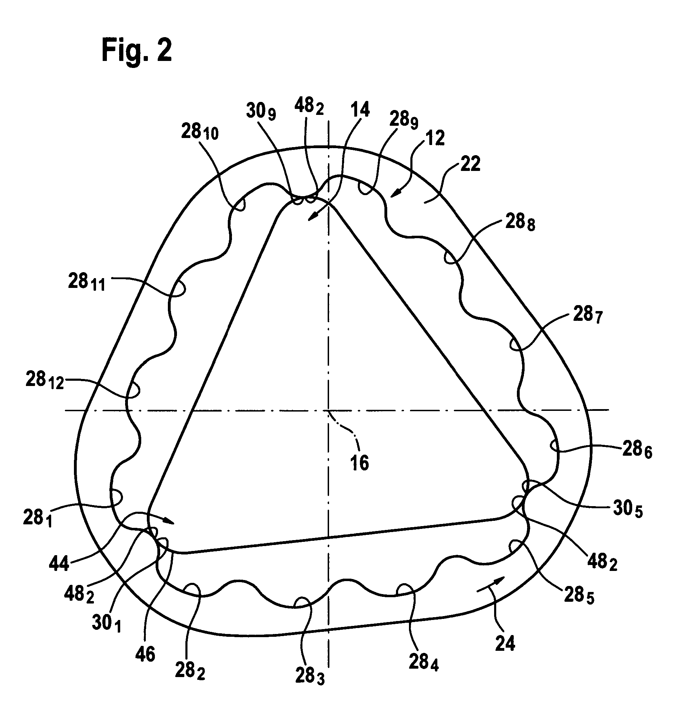

Aufgrund der Ausbildung des Mantelkörpers 22 aus einem elastisch deformierbaren Material, beispielsweise Kunststoff, der es zulässt, den Mantelkörper 22, wie in Figur 2 dargestellt, in eine Form zu bringen, in welcher jeweils alle Vertiefungen 28 mit ihren tiefsten Stellen 34 und jeweils alle Erhebungen 30 mit den höchsten Stellen 36 nicht mehr jeweils denselben radialen Abstand von der Drehachse 16 aufweisen, besteht die Möglichkeit, den Außenkörper 12 und den Innenkörper 14 ausgehend von einer der Raststellungen relativ zueinander um die Drehachse 16 zu verdrehen und dabei die Rastelemente 26, 42 zu entrasten, wobei, wie in Figur 2 dargestellt, die Wölbungen 46 der radialen Vorsprünge 44 sich über die an die jeweilige Vertiefung 28, beispielsweise die Vertiefungen 28₁, 28₅, 28₉, in Umlaufrichtung 24 anschließende Erhebung 30, beispielsweise die Erhebungen 30₁, 30₅ und 30₉, durch ein Wandern der Berührungsstellen 48₁ zu den Berührungsstellen 48₂ hinwegbewegen, und in der Stellung, in der die Wölbungen 46 an den höchsten Stellen 36 der Erhebungen 30 anliegen, der Mantelkörper 22 die maximale Deformation gegenüber dem Mantelkörper 22 in der Raststellung aufweist, die erforderlich ist, um die Erhebungen 30₁, 30₅ und 30₉ soweit radial zur Drehachse 16 nach Außen zu bewegen, dass sich die Wölbungen 46 des Innenkörpers 14 über diese Erhebungen 30 hinweg in die in Umlaufrichtung 24 nächstfolgende Vertiefung 28₂, 28₆ und 28₁₀ bewegen können.

Ein weiteres Verrasten in einer der Raststellungen erfolgt sobald die Wölbungen 46 die nächstfolgenden Vertiefungen 28₂, 28₆ und 28₁₀ erreicht haben, springt der Mantelkörper 22 wieder in seine ursprüngliche, in Figur 1 dargestellte Form zurück, in welcher die tiefsten Stellen 34 der Vertiefungen 28 und die höchsten Stellen 36 der Erhebungen 30 jeweils wieder denselben radialen Abstand von der Drehachse 16 haben.

Bei dem ersten Ausführungsbeispiel kann somit bei einer Relativdrehung von Innenkörper 14 und Außenkörper 12 in einer Drehrichtung eine beliebige Zahl von Entrastvorgängen und Verrastvorgängen durchlaufen werden.

Dadurch, dass während des Hinweggleitens der Wölbungen 46 über die Wölbungen 32 der Erhebungen 30 jede der Wölbungen 46 stets in Kontakt mit dem jeweiligen durch die Wölbungen 46 beaufschlagten Bereich der Erhebungen 30 ist, wird bei einem Entrastvorgang und bei einem Verrastvorgang der Innenkörper 14 nach wie vor zentriert zur Drehachse 16 durch den Mantelkörper 22 zentriert geführt und es entstehen somit keine Querkräfte auf den Innenkörper 14, deren Summe nicht eine zur Drehachse 16 zentrierte Anordnung des Innenkörpers 14 und des Außenkörpers 12 bewirken.

Das in Figur 1 und 2 dargestellte erste Ausführungsbeispiel der erfindungsgemäßen Drehverbindungseinheit 10 lässt sich zweckmäßigerweise zum Antrieb einer als Ganzes mit 50 bezeichneten Windstoppeinrichtung einsetzen,
wobei die Windstoppeinrichtung 50 eine Windschotteinheit 52 und als Windstoppbasis beispielsweise eine Abdeckeinheit 54 aufweist.

Die Windstoppbasis in Form der Abdeckeinheit 54 wird dabei in bekannter Art und Weise vorzugsweise in Höhe einer Gürtellinie an einem Fahrzeug montiert und deckt eine Karosserieöffnung ab, die hinter der vordersten Sitzreihe liegt. Es ist aber auch denkbar, als Windstoppbasis einen in Höhe der Gürtellinie am Fahrzeug montierten Träger einzusetzen.

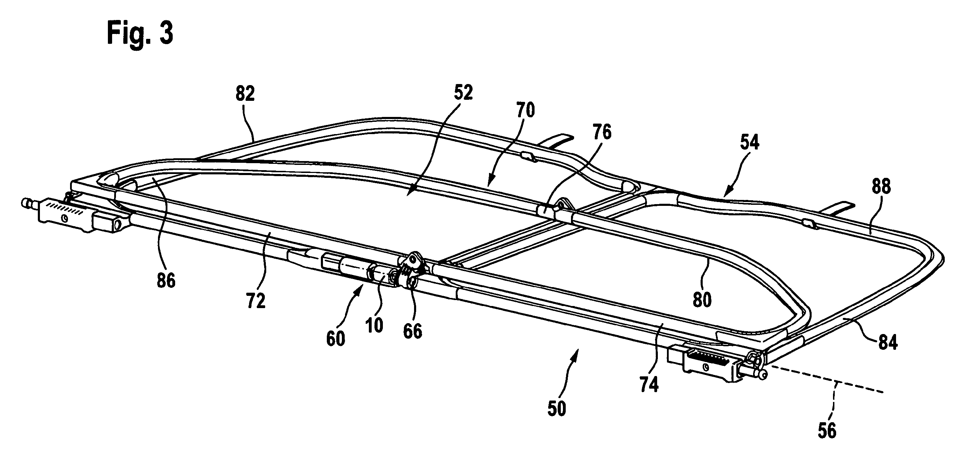

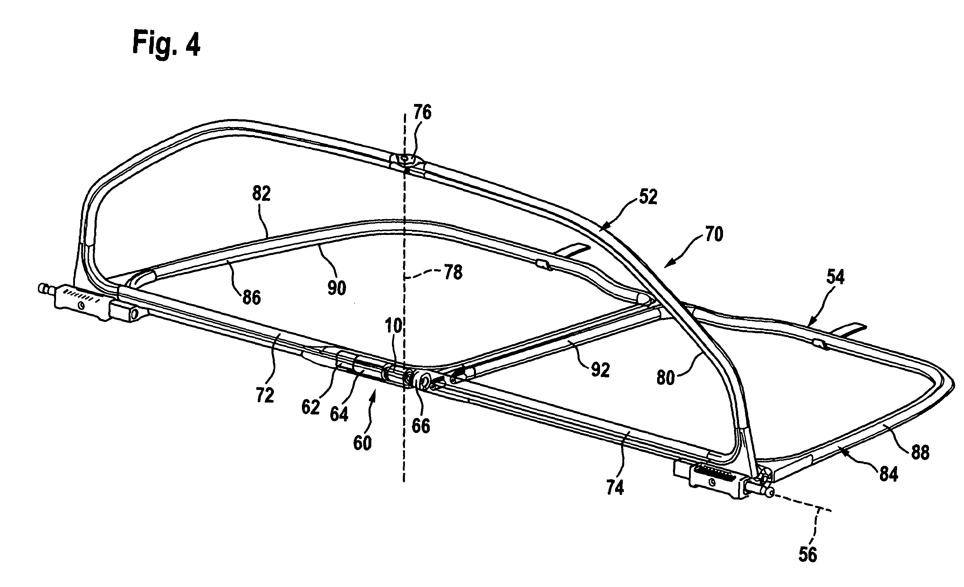

An der Abdeckeinheit 54 ist die Windschotteinheit 52 um eine Achse 56 drehbar gelagert, wobei die Windschotteinheit 52 einmal in einer auf die Abdeckeinheit 54 abgeklappten Stellung, dargestellt in Figur 3 oder in einer aktiven nach oben geklappten Stellung stehen kann, in welcher die Windschotteinheit 52 einen Winkel von ungefähr 90° mit der Abdeckeinheit einschließt. Diese Stellung der Windschotteinheit 52 relativ zur Abdeckeinheit 54 ist in Figur 4 dargestellt.

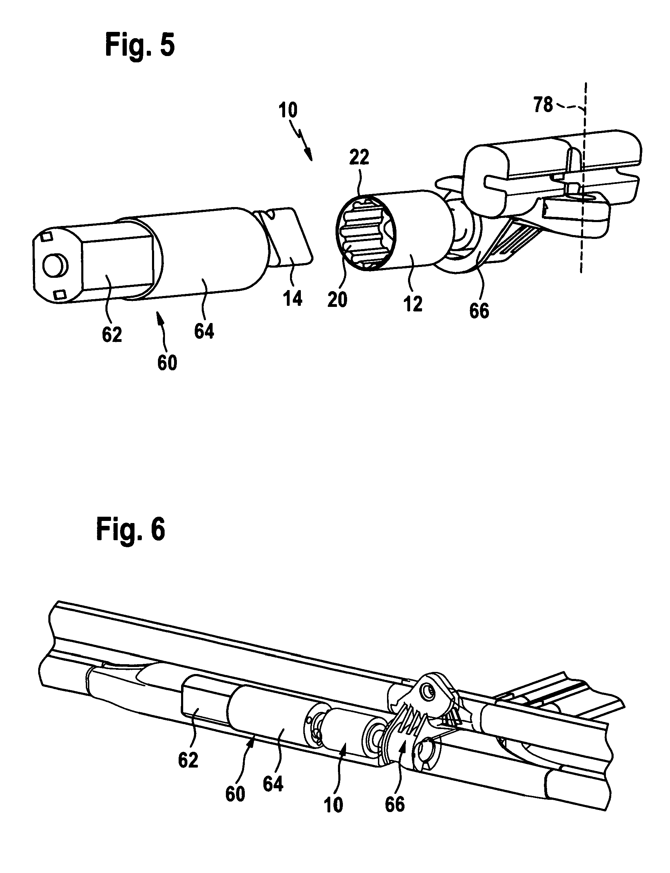

Zum Verschwenken der Windschotteinheit 52 zwischen der in Figur 3 dargestellten, auf die Abdeckeinheit 54 abgeklappten inaktiven Stellung und der in Figur 4 dargestellten hochgestellten, aktiven Stellung ist ein als Ganzes mit 60 bezeichneter Aufstellantrieb vorgesehen, welcher, wie in Figur 5 dargestellt, einen Antriebsmotor 62, vorzugsweise einen Elektromotor, und ein von dem Antriebsmotor 62 angetriebenes Getriebe 64 aufweist, die eines der Verbindungselemente, beispielsweise den Innenkörper 14, der erfindungsgemäßen Drehverbindungseinheit 10 antreiben, der in den Außenkörper 12, und zwar die Ausnehmung 20 des Außenkörpers 12 eingreift, wobei der Außenkörper 12 drehfest mit einem Mittelgelenk 66 der Windschotteinheit 52 verbunden ist, wie in Figur 6 dargestellt.

Das Mittelgelenk 66 ist dabei Teil eines zweigeteilten Rahmens 70 der Windschotteinheit 52, der zwei Rahmenhälften 72 und 74 aufweist, die einerseits durch das Mittelgelenk 66 und andererseits ein diesem gegenüberliegendes Mittelgelenk 76 gelenkig miteinander verbunden sind, so dass die beiden Rahmenhälften 72 und 74 um eine Klappachse 78 relativ zueinander klappbar sind.

In den Rahmen 70 ist dann üblicherweise ein Flachmaterial eingespannt, welches eine Rahmenöffnung 80 des Rahmens 70 derart überdeckt, dass durch die Rahmenöffnung 80 keine Zugluft erzeugende Luftströmung hindurchtreten kann.

Beispielsweise ist auch die Abdeckeinheit 54 aus zwei relativ zueinander Abdeckteilen 82 und 84 ausgebildet, wobei jedes der Abdeckteile 82 und 84 einen eigenen Rahmen 86 und 88 aufweist, dessen jeweilige Rahmenöffnung 90, 92 ebenfalls durch ein zugluftverhinderndes Flachmaterial verschlossen ist.

Durch den Aufstellantrieb 60 besteht somit die Möglichkeit, den Rahmen 70 der Windschotteinheit 52 um die Achse 56 relativ zur Abdeckeinheit 54 zwischen der in Figur 3 dargestellten abgeklappten, inaktiven Stellung und der in Figur 4 dargestellten hochgeklappten, aktiven Stellung zu verschwenken.

Sollte nun aus irgendeinem Grund, beispielsweise einem auf der Abdeckeinheit 54 liegenden Gepäckteil, oder einem Körperteil einer Person eine Hinderung der Schwenkbewegung der Windschotteinheit 52 auftreten, so verhindert die erfindungsgemäße Drehverbindungseinheit 10 eine Beschädigung entweder des Gepäckstücks, des Körperteils oder der Windschotteinheit 52 oder des Antriebsmotors 62 mit dem Getriebe 64 dadurch, dass die Drehverbindungseinheit 10 stets von der in Figur 1 dargestellten verrasteten Stellung in die in Figur 2 dargestellte entrastete Stellung und dann wieder in die verrastete Stellung und wieder in die entrastete Stellung und so weiter übergehen kann, solange bis ein Abschalten des Antriebsmotors 62 erfolgt.

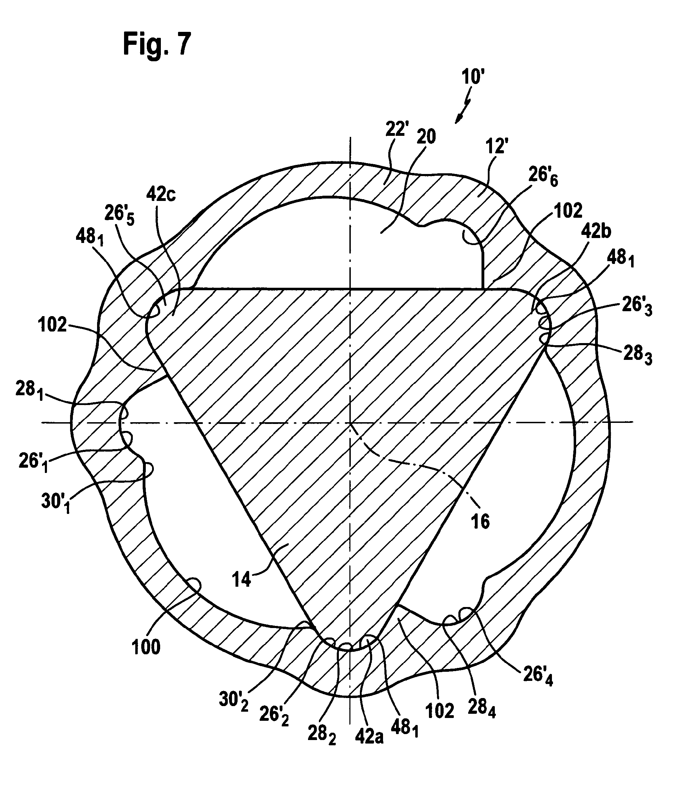

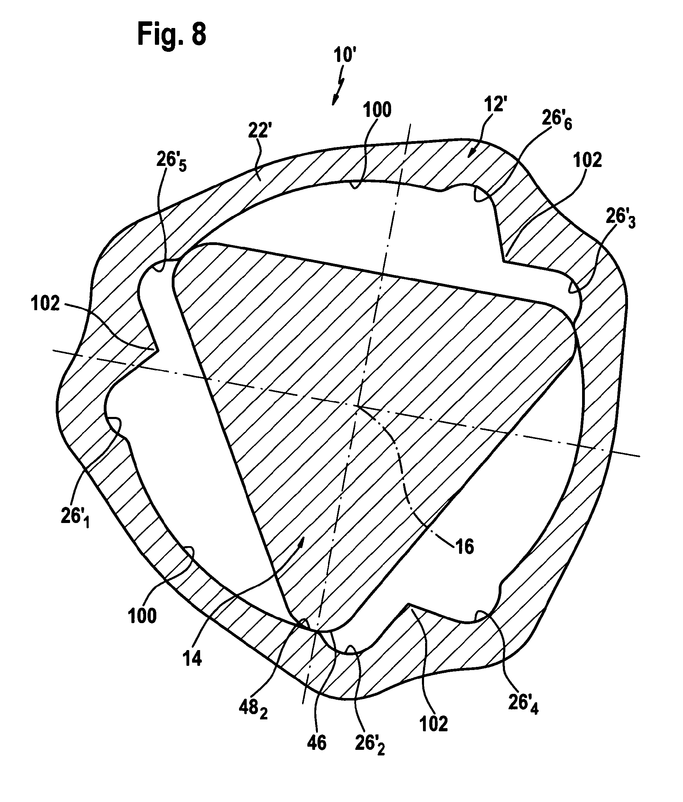

Bei einem zweiten Ausführungsbeispiel einer erfindungsgemäßen Drehverbindungseinheit 10', dargestellt in Figur 7 und 8, ist ebenfalls ein Außenkörper 12' vorgesehen, in dessen Ausnehmung 20 der Innenkörper 14 eingreift,
wobei sowohl der Außenkörper 12' als auch der Innenkörper 14 wie beim ersten Ausführungsbeispiel koaxial zur Drehachse 16 angeordnet sind.

Im Gegensatz zum ersten Ausführungsbeispiel weist der Außenkörper 12', wie in Figur 7 und 8 dargestellt, für jedes der Rastelemente 42a, 42b und 42c des Innenkörpers 14 zwei Rastelemente 26' auf, nämlich die Rastelemente 26'₁ und 26'₂ für das Rastelement 42a, die Rastelemente 26'₃ und 26'₄ für das Rastelement 42b und die Rastelemente 26'₅ und 26'₆ für das Rastelement 42c auf, die diesen ausschließlich zugeordnet sind.

Die Rastelemente 26' bilden dabei in gleicher Weise wie beim ersten Ausführungsbeispiel konkave Vertiefungen 28, die in im Wesentlichen ähnlicher Art und Weise wie beim ersten Ausführungsbeispiel ausgebildet sind.

Allerdings schließt sich bei jedem der Rastelemente 26', und zwar auf seiner dem jeweils anderen Rastelement 26' zugewandten Seite, eine Erhebung 30' an, also beispielsweise beim Rastelement 26'₁ auf seiner dem Rastelement 26'₂ zugewandten Seite die Erhebung 30'₁ und beim Rastelement 26'₂ auf seiner dem Rastelement 26'₁ zugewandten Seite die Erhebung 30'₂ und zwischen den beiden Erhebungen 30, also beispielsweise zwischen den Erhebungen 30'₁ und 30'₂, liegt ein nichtverrastender Führungsbereich 100, auf welchem das jeweilige Rastelement 42 entlanggleiten kann.

Beispielsweise kann somit das Rastelement 42a ausgehend von der in Figur 7 gezeichneten Raststellung aus dem Rastelement 26'₂ heraus über die Erhebung 30'₂ in den Führungsbereich 100 gleiten, dann längs des Führungsbereichs 100 und wieder über die Erhebung 30'₁ in das Rastelement 26'₁ hineingleiten. Dabei erfolgt lediglich eine formschlüssige Verrastung des Rastelements 42a entweder im Rastelement 26'₂ oder im Rastelement 26'₁, während sowohl die Erhebungen 30'₂ und 30'₁ sowohl wie der Führungsbereich 100 keine definierte formschlüssige Positionierung des Rastelements 42a des Innenkörpers 14 bewirken.

Da auch beim zweiten Ausführungsbeispiel der Mantelkörper 22' in gleicher Weise wie beim ersten Ausführungsbeispiel elastisch deformierbar ist, besteht die Möglichkeit, wie in Figur 8 dargestellt, dass sich die Rastelemente 42 ausschließlich durch Deformation des Mantelkörpers 22' über die jeweiligen Erhebungen 30' hinwegbewegen können und über den Führungsbereich 100 bis zur nächsten Erhebung 30 bewegt werden können und dann über diese hinweg wieder in das andere Rastelement 26' eintauchen können. Dabei wandern wie beim ersten Ausführungsbeispiel die Berührungsstellen 48, beispielsweise von der Berührungsstelle 48₁ in Figur 7, zur Berührungsstelle 48₂ in Figur 8.

Um sicherzustellen, dass lediglich das jeweilige Rastelement 42, beispielsweise das Rastelement 42a, zwischen den diesen zugeordneten Rastelementen 26', beispielsweise den Rastelementen 26'₁ und 26'₂, bewegbar ist, ist auf der dem jeweils zugeordneten Rastelement 26' gegenüberliegenden Seite, also beispielsweise zwischen dem Rastelement 26'₂ und 26'₄, jeweils ein Blockierelement 102 vorgesehen, das eine derartige Erstreckung radial nach innen in Richtung der Drehachse 16 aufweist, dass dieses von dem jeweiligen Rastelementen 42 nicht überwunden werden kann, so dass die jeweiligen Rastelemente 42, beispielsweise das Rastelement 42a, lediglich zwischen den diesen zugeordneten Rastelementen 26', beispielsweise den Rastelementen 26'₁ und 26'₂, bewegbar sind.

Damit ist beim zweiten Ausführungsbeispiel der erfindungsgemäßen Drehverbindungseinheit 10' eine festgelegte Schwenkbewegung der Verbindungselemente 12 und 14 relativ zueinander um einen definierten Winkel, vorgegeben im Ausführungsbeispiel gemäß Figur 7 und Figur 8 beispielsweise einen Winkel von ungefähr 90°, und in jeder Endstellung erfolgt eine Verrastung durch Eingreifen des jeweiligen Rastelements 42 in eines der diesem zugeordneten Rastelemente 26', beispielsweise des Rastelements 42a in das Rastelement 26'₁ oder 26'₂.

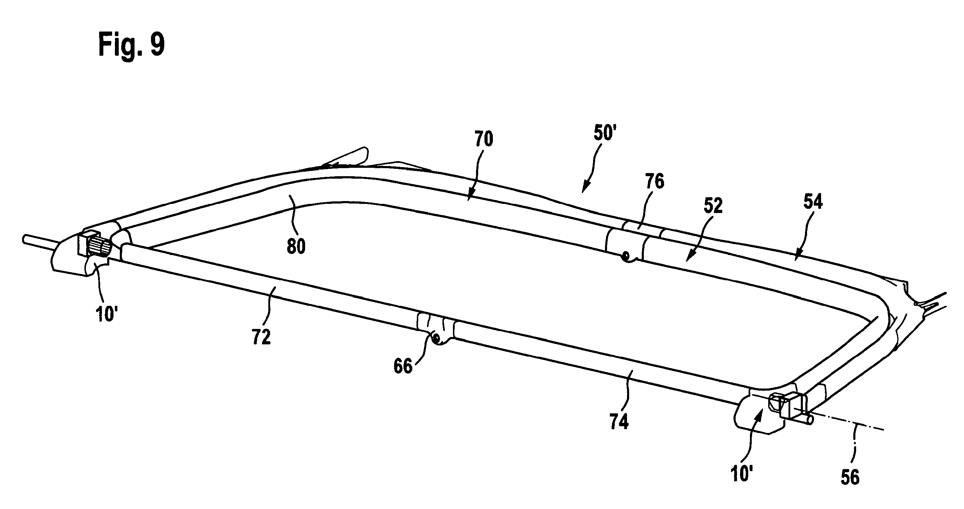

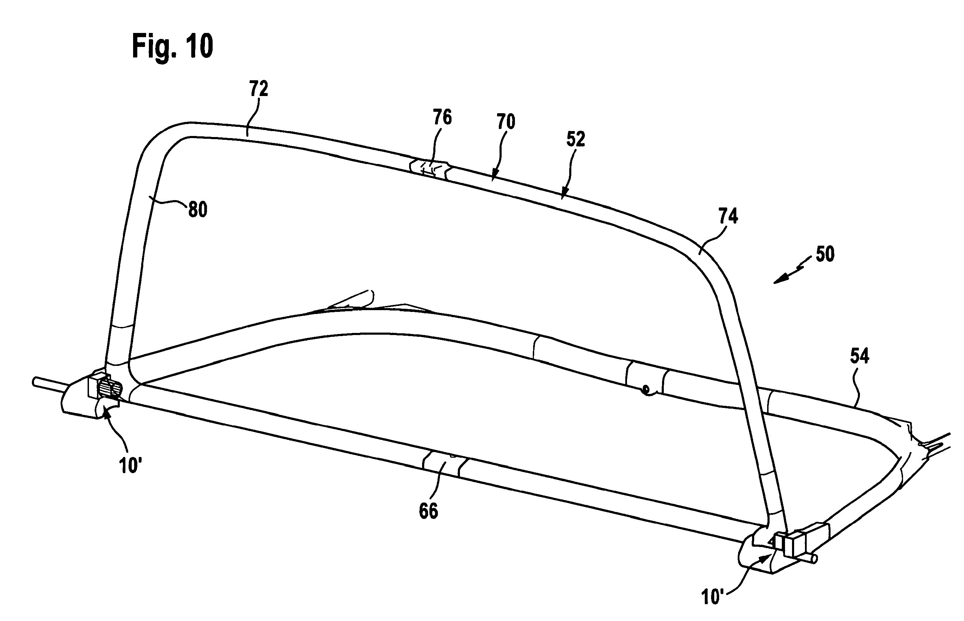

Eine derartige Drehverbindungseinheit 10' lässt sich, wie in Figur 9 und Figur 10 dargestellt, ebenfalls bei einer Windstoppeinrichtung 50' einsetzen, und zwar zum Festlegen der Windschotteinheit 52 relativ zur Abdeckeinheit 54.

Dabei erfolgt ein Fixieren der Windschotteinheit 52 einerseits in einer auf die Abdeckeinheit 54 abgeklappten, inaktiven Stellung, dargestellt in Figur 9 oder einer relativ zur Abdeckeinheit 54 hochgeklappten aktiven Stellung der Windschotteinheit 52, wie in Figur 10 dargestellt.

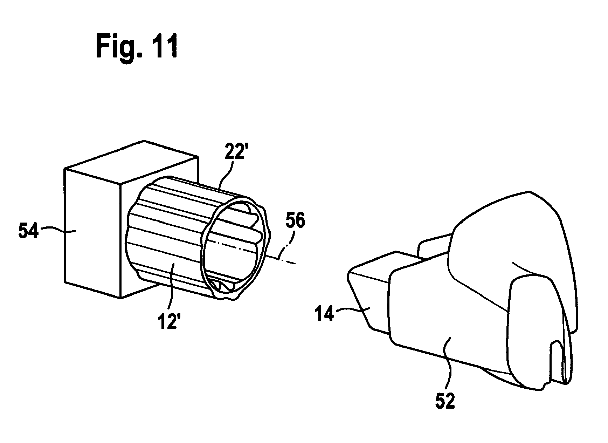

Um dies zu erreichen ist beispielsweise, wie in Figur 11 dargestellt, koaxial zur Achse 56 an der Abdeckeinheit 54 der Außenkörper 12' mit dem Mantelkörper 22' gehalten und in diesen greift der Innenkörper 14 ein, der fest mit der Windschotteinheit 52 verbunden ist.

Der Innenkörper 14 und der Außenkörper 12' sind dabei so relativ zueinander angeordnet, dass jedes der Rastelemente 42 des Innenkörpers 14 in der in Figur 9 dargestellten, auf die Abdeckeinheit 54 abgeklappten Stellung der Windschotteinheit 52 in eines der Rastelemente 26' einrastet und außerdem in der in Figur 10 dargestellten hochgeklappten aktiven Stellung der Windschotteinheit 52 relativ zur Abdeckeinheit 54 ebenfalls jedes der Rastelemente 42 in das jeweils andere Rastelement 26' einrastet, wobei der Schwenkwinkel, um welchen die Windschotteinheit 52 zwischen der abgeklappten und der hochgeklappten Stellung verschwenkbar ist, ungefähr 90° beträgt.

Im Übrigen sind bei dem zweiten Ausführungsbeispiel der erfindungsgemäßen Drehverbindungseinheit identische Teile mit denselben Bezugszeichen wie beim ersten Ausführungsbeispiel versehen, so dass hinsichtlich der Beschreibung derselben auf die Ausführungen zum ersten Ausführungsbeispiel Bezug genommen werden kann.

## Patentansprüche

1. Drehverbindungseinheit umfassend ein erstes (12) und ein zweites (14) Verbindungselement, die in mindestens einer Drehstellung miteinander unter Bildung einer drehfesten Verbindung verrastbar und durch eine Relativdrehung entrastbar sind,
**dadurch gekennzeichnet, dass** das erste Verbindungselement (12) einen eine Ausnehmung (20) umschließenden Außenkörper (12) mit mindestens einem ersten Rastelement (26) aufweist, dass das zweite Verbindungselement mit einem Innenkörper (14) in die Ausnehmung (20) eingreift, dass der Innenkörper (14) mindestens ein zweites Rastelement (42) aufweist und dass eines der Rastelemente (26, 42) mindestens eine radiale Vertiefung (28) und das andere der Rastelemente mindestens einen radialen Vorsprung (44) aufweist.

2. Drehverbindungseinheit nach Anspruch 1, **dadurch gekennzeichnet, dass** die Verbindungselemente (12, 14) bei Berührungskontakt des Innenkörpers (14) mit dem Außenkörper (12) durch sich ausbildende Berührungsstellen (48) zwischen diesen relativ zueinander zentriert geführt sind.

3. Drehverbindungseinheit nach Anspruch 1 oder 2, **dadurch gekennzeichnet, dass** die Verbindungselemente (12, 14) in einer Raststellung durch die Berührungsstellen (48) zwischen dem Innenkörper (14) und dem Außenkörper (12) relativ zueinander zentriert geführt sind.

4. Drehverbindungseinheit nach Anspruch 2 oder 3, **dadurch gekennzeichnet, dass** die Zentrierung über mindestens zwei Berührungsstellen (48) erfolgt.

5. Drehverbindungseinheit nach Anspruch 4, **dadurch gekennzeichnet, dass** die Zentrierung über mindestens drei Berührungsstellen (48) erfolgt.

6. Drehverbindungseinheit nach einem der Ansprüche 2 bis 5, **dadurch gekennzeichnet, dass** mindestens eines der Rastelemente (42) zur Bildung einer Berührungsstelle (48) beiträgt.

7. Drehverbindungseinheit nach einem der voranstehenden Ansprüche,
**dadurch gekennzeichnet, dass** der Innenkörper (14) durch ständige Abstützung (12) am Außenkörper zentriert zum Mantelkörper (22) geführt ist.

8. Drehverbindungseinheit nach einem der voranstehenden Ansprüche,
**dadurch gekennzeichnet, dass** eine radiale Bewegung von mindestens einem der Rastelemente (26) beim Verrasten und Entrasten erfolgt.

9. Drehverbindungseinheit nach Anspruch 8, **dadurch gekennzeichnet, dass** die radiale Bewegung der Rastelemente (26) durch eine mindestens bereichsweise erfolgende Deformation des Mantelkörpers realisierbar ist.

10. Drehverbindungseinheit nach Anspruch 9, **dadurch gekennzeichnet, dass** die mindestens bereichsweise Deformation des Mantelkörpers (22) auch in den Bereichen des Außenkörpers (12) zwischen den sich ausbildenden Berührungsstellen (48) erfolgt.

11. Drehverbindungseinheit nach einem der voranstehenden Ansprüche,
**dadurch gekennzeichnet, dass** der Außenkörper (12) einen geschlossen umlaufenden Mantelkörper (22) aufweist.

12. Drehverbindungseinheit nach einem der voranstehenden Ansprüche,
**dadurch gekennzeichnet, dass** diese in einer möglichen Drehrichtung eine unbegrenzte Zahl von Entrastvorgängen und Verrastvorgängen zulässt.

13. Drehverbindungseinheit nach einem der Ansprüche 1 bis 11, **dadurch gekennzeichnet, dass** die Drehverbindungseinheit in einer möglichen Drehrichtung eine vorgegebene Anzahl von Entrastvorgängen und Verrastvorgängen zulässt.

14. Windstoppeinrichtung umfassend eine Windstoppbasis (54), eine gegenüber der Windstoppbasis (54) zwischen einer aktiven Stellung und einer inaktiven Stellung bewegbare Windschotteinheit (52), **dadurch gekennzeichnet, dass** die Windschotteinheit (52) mit der Windstoppbasis (54) über eine Drehverbindungseinheit (10) nach einem der voranstehenden Ansprüche gekoppelt ist.

15. Windstoppeinrichtung umfassend eine Windstoppbasis (54) und eine gegenüber der Windstoppbasis (54) zwischen einer aktiven Stellung und einer inaktiven Stellung mittels eines Aufstellantriebs (60) bewegbare Windschotteinheit (52), **dadurch gekennzeichnet, dass** der Aufstellantrieb (60) über eine Drehverbindungseinheit (10) nach einem der voranstehenden Ansprüche 1 bis 13 ein Bewegen der Windschotteinheit (52) bewirkt.
